# EUROPEAN PATENT SPECIFICATION

(11) **EP 1 466 944 B1**
(45) Date of publication and mention of the grant of the patent: **27.03.2013**
(21) Application number: 02738887.5
(22) Date of filing: 28.06.2002
(51) Int. Cl.: C08L 77/06, C08K 7/08, C08K 3/34, C08K 3/24, C08K 7/04, C08K 7/10, G02B 5/08

(54) **RESIN COMPOSITION FOR REFLECTING PLATE**
HARZZUSAMMENSETZUNG FÜR REFLEKTIERENDE PLATTE
COMPOSITION RESINEUSE POUR PLAQUE REFLECHISSANTE

(30) Priority: 26.12.2001 JP 2001395050
(43) Date of publication of application: 13.10.2004
(60) Divisional application: 07117251.4
(73) Proprietor: Otsuka Chemical Co., Ltd., Osaka-shi, Osaka 540-0021 (JP)
(72) Inventor: TSUTSUMI, Hideyuki, OTSUKA KAGAKU KABUSHIKI K., Tokushima-shi, Tokushima 772-8601 (JP); TABUCHI, Akira, OTSUKA KAGAKU KABUSHIKI KAISHA, Tokushima-shi, Tokushima 772-8601 (JP); YAGI, Toshiaki, OTSUKA KAGAKU KABUSHIKI KAISHA, Tokushima-shi, Tokushima 772-8601 (JP)
(74) Representative: Wablat, Wolfgang
(86) International application number: PCT/JP2002/006618
(87) International publication number: WO 2003/055947

(56) References cited:
- EP-A- 0 056 986
- WO-A1-01/09233
- JP-A- 1 168 758
- JP-A- 5 279 530
- JP-A- 6 065 500
- JP-A- 6 200 153
- JP-A- 7 242 810
- JP-A- 8 041 341
- JP-A- 62 223 261

## Description

### TECHNICAL FIELD

The present invention relates to a resin composition for reflector plates that is suitably used for emission devices such as a light emission diode (hereafter, referred to as "LED").

### BACKGROUND ART

LEDs are emission apparatuses which are produced by mounting an emission device on a reflector plate (substrate) and sealing it with epoxy resin or the like, and that have a variety of preferred characteristics such as being readily incorporated into various instruments due to being small and lightweight, having a very long life on account of being strong against vibration and repetition of ON/OFF, and exhibiting clear coloring and particularly excellent visibility, as well as having a relatively small amount of electricity to be consumed. Of these LEDs, a white LED fitted with an ultraviolet light emitting device and a phosphor, which emits white light by ultraviolet rays generated by the ultraviolet light emitting device, has received great attention as light sources for a back light of a liquid crystal display screen for a cellular phone, a computer, a television and the like, a headlight of an automobile and an instrument panel, lighting equipment, and the like.

An LED reflector pilate used for such emission apparatuses generally requires good reflection performance that reflects light or ultraviolet rays emitted by an emission device at a high efficiency. In addition, the LED reflector plate needs high dimensional precision because the LED reflector plate like an emission device is a fine part of from about 1 to about 2 mm, and also needs an excellent mechanical strength on account of a possible decrease in reflection performance thereof even for a small distortion, and further a high heat resistance due to being exposed to a high temperature by means of soldering and the like.

Conventionally, the reflector plates of LEDs include, for example, a reflector plate made by applying plating and coating to a resin molded article. The reflector plate, while acceptably offering practical use in reflection performance, has disadvantages of being difficult to uniformly apply plating to the whole, tending to be deviated from dimensional precision, and having a high rate of defectives, on account of a very fine article as mentioned above. Furthermore, mechanical strength and heat resistance thereof, when considering a long life of an LED, is not sufficiently satisfied.

As such, there is proposed, for example, as a resin composition for reflector plates a resin composition produced by blending with fiberglass a melt processed polyester such as an aromatic polyester and an aromatic polyester amide and further, as appropriate, blending titanium oxide (Japanese Examined Patent Application Publication No. 06-38520). This resin composition is good in heat resistance and dimensional stability to some extent, but has disadvantages of being insufficient in the degree of whiteness, and being low in light reflection factor. According to the above publication, although potassium titanate fibers and wollastonite are cited as mixable inorganic fibers in addition to fiberglass as well, inorganic fibers thereof in combination with a melt processed polyester cannot obtain a sufficient light reflection factor.

Further, proposed are a resin composition containing therein 10 to 40% by weight of an aromatic polyester, 15 to 55% by weight of a polyamide, 15 to 45% by weight of a polycarbonate and 10 to 30% by weight of titanium oxide (Japanese Unexamined Patent Application Publication No. 59-113049), a resin composition made of 60 to 95% by weight of a polyamide (nylon 46) and 5 to 40% by weight of titanium oxide (Japanese Unexamined Patent Application Publication No. 02-288274), a resin composition made by blending matrix resin of a polyester and a polyamide with 10 to 50% by weight of titanium oxide and 0.3 to 30% by weight of a modified polyolefin (Japanese Unexamined Patent Application Publication No. 03-84060), and the like. These resin compositions, however, provide the disadvantages of large molding shrinkage factor and linear expansion coefficient, and bad dimensional stability specifically on account of the linear expansion coefficient upon a high temperature load. Furthermore, they cannot sufficiently satisfy the light reflection factor and light-screening factor.

In other words, resin compositions for conventional reflector plates have a level of satisfying some physical properties that are needed as the reflector plate, but pause problems of the other physical properties being not capable of satisfaction.

Accordingly, taking into consideration the above-described conventional problems, it is an object of the present invention to provide a resin composition for reflector plates that satisfies desired, various physical properties at a high level and can be suitably used as a reflector plate.

Moreover, in addition to these problems, use of an LED fitted with an ultraviolet light emitting device cannot provide sufficient brightness even when any of the above-described LED reflector plates are used, leading to the problem of lowering visibility. Hence, as light sources of a back light of a liquid crystal display screen for a cellular phone, an instrument panel for an automobile, and the like, the LEDs fitted with the ultraviolet light emitting device are unsuitable. In addition, neither the mechanical strength nor the heat resistance of the reflector plates can reach a sufficiently satisfactory level; the use of a long period of time results in possible distortion.

Conventionally, in order to primarily improve mechanical strength and heat resistance as well as flame resistance, Japanese Unexamined Patent Application Publication No. 07-242810 has proposed as a reflector plate a resin composition produced by blending a thermoplastic resin such as an aromatic polycarbonate with titanium oxide and potassium titanate fibers. Nonetheless, a reflector plate made of the material utilizes potassium titanate fibers for the purpose of mainly improving mechanical strength and heat resistance as well as flame resistance and essentially requires a combination with titanium oxide, and thus the application of the reflector plate to a white LED having an ultraviolet light emitting device leads to insufficient brightness and is incapable of avoiding a decrease in visibility.

In addition, Japanese Unexamined Patent Application Publication No. 62-179780 has disclosed a resin composition made by blending a melt processing polyester such as an aromatic polyester or an aromatic polyester amide with white dyes such as titanium oxide, zinc oxide, zinc sulfide, zinc sulfate and white lead, as reflector plate materials, and containing therein, as required, a filler such as potassium titanate fibers or fiberglass. However, the above publication neither specifically discloses a composition made by blending a polyester substantially only with potassium titanate fibers, nor suggests that the composition is extremely useful as a reflector plate for a LED equipped with an ultraviolet light emitting device and a phosphor, which emits light by ultraviolet rays generated by the ultraviolet light emitting device.

On the other hand, a resin composition produced by blending a thermoplastic resin with potassium titanate fibers and the like is well known besides the above-described publications, and is used as materials of housing, mechanism parts, sliding parts and the like of electrical and electronic articles, precision machinery, and other machinery. Also, the purpose for blending potassium titanate and the like is only to improve the mechanical strength.

That is, in prior art, neither use of a composition made by blending a thermoplastic resin solely with potassium titanate fibers is carried out as a reflector material for an ultraviolet-ray source, nor special effects obtained thereby are known at all.

Thus, it is another object of the present invention to provide a resin composition for reflector plates that obtains a sufficient reflection factor and thus brightness, and which at the same time satisfies the above-described desired physical properties, even when a composition is employed for a white LED apparatus fitted with an ultraviolet-ray emission device.

### DISCLOSURE OF THE INVENTION

The present inventor, as a result of earnest studies to achieve the first above described object, has successfully obtained a resin composition suited to material for reflector plates, thus accomplishing the present invention.

Namely, the present invention relates to a resin composition for reflector plates as set out in claim 1.

In accordance with the present invention, there can be provided a resin composition, produced by blending therein specified inorganic fibers, which do not spoil useful physical properties the semi-aromatic polyamide has, which satisfy at a high level desired physical properties such as the light reflection factor, whiteness, molding processability, mechanical strength, dimensional stability, heat resistance and hygroscopicity, and particularly which are excellent in light screening and capable of maintaining a high whiteness without discoloring even though exposed to a high temperature.

While it is known that blending of a synthetic resin with inorganic fibers improves mechanical strength, dimensional stability, heat resistance and the like, the present invention produces these effects as well as further, by a combination of the aforementioned semi-aromatic polyamide, potassium titanate fibers and wollastonite, particularly bringing about the excellent effect of light screening being remarkably high.

A resin composition having the excellent physical properties such as stated above of the present invention is useful as a reflector plate material, especially as an LED reflector plate material.

### BEST MODE FOR CARRYING OUT THE INVENTION

In the present invention, the semi-aromatic polyamides stand for polyamides containing therein aromatic monomers as monomer components of a polyamide. For a semi-aromatic polyamide used as a matrix, the aromatic monomers in the monomer components constituting the semi-aromatic polyamide are 20% by mole or more, preferably 25% by mole, more preferably from 30 to 60% by mole; the melting point of the semi-aromatic polyamide is preferably 280°C or more, more preferably from 280 to 320°C. Here, the molar fractions of the monomers in an aromatic polyamide can be adjusted by setting the ratios of the monomers in polymer material to be specified molar fractions.

The aromatic monomers include, for example, aromatic diamines, aromatic dicarboxylic acids, aromatic aminocarboxylic acids and the like. The aromatic diamines include, for example, p-phenylenediamine, o-phenylenediamine, m-phenylenediamine, paraxylenediamine, metaxylenediamine and the like. The aromatic dicarboxylic acids include, for example, terephthalic acid, isophthalic acid, phthalic acid, 2-methylterephthalic acid, naphthalene dicarboxylic acid and the like. Also, the aromatic aminocarboxylic acids include, for example, p-aminobenzoic acid and the like. Of these, aromatic dicarboxylic acids are preferable. The aromatic monomers can be used solely or in combination of two or more thereof.

The monomer components exclusive of the aromatic monomers include aliphatic dicarboxylic acids, aliphatic alkylenediamines, alicyclic alkylenediamines, aliphatic aminocarboxylic acids and the like.

The aliphatic dicarboxylic acids include adipic acid, sebacic acid, azelaic acid, dodecanedionic acid and the like. Of these, adipic acid is preferable. The aliphatic dicarboxylic acids can be used solely or in combination of two or more thereof.

The aliphatic alkylenediamines may be of straight chains or of branched chains. More specifically, the aliphatic alkylenediamines include ethlenediamine, trimethylenediamine, tetramethylenediamine, pentamethylenediamine, hexamethylenediamine, 1,7-diaminoheptane, 1,8-diaminooctane, 1,9-diaminononane, 1,10-diaminodecane, 2-methylpentamethylenediamine, 2-ethyltetrametylenediamine and the like. Of these, hexamethylenediamine, 2-methylpentamethylenediamine and the like are preferable. The aliphatic alkylenediamines can be used solely or in combination of two or more thereof.

The alicyclic alkylenediamines include, for example, 1,3-diaminocyclohexane, 1,4-diaminocyclohexane, 1,3-bis(aminomethyl)cyclohexane, bis(aminomethyl)cyclohexane, bis(4-aminocyclohexyl)methane, 4,4'-diamin-3-3'-dimethyldicyclohexylmethane, isophoronediamine, piperazine and the like. The alicyclic alkylenediamines can be used solely or in combination of two or more thereof.

The aliphatic aminocarboxylic acids can include, for example, 6-aminocaproic acid, 11-aminoundecanoic acid, 12-aminododecanoic acid and the like; cyclic lactams corresponding to these may be used. The aliphatic aminocarboxylic acids can be used solely or in combination of two or more thereof.

Of these monomer components, aliphatic dicarboxylic acids, aliphatic alkylenediamines and the like are preferable. These monomer components can be used solely or in combination of two or more thereof.

Of the aforementioned semi-aromatic polyamides, those containing an aromatic dicarboxylic acid, an aliphatic dicarboxylic acid, an aliphatic alkylenediamines and the like are preferable.

Furthermore, even of these semi-aromatic polyamides, the dicarboxylic acids comprising terephthalic acid, and comprising a mixture of terephthalic acid and isophthalic acid, and comprising a mixture of terephthalic acid, isophthalic acid and adipic acid are preferable. In the two aforementioned mixtures, a mixture having a ratio of terephthalic acid being 40% by mole or more is particularly preferable. In addition, even of these semi-aromatic polyamides, the aliphatic alkylenediamines comprising hexamethylenediamine and comprising a mixture of hexamethylenediamine and 2-methylpentamethylenediamine are particularly preferable.

Of the semi-aromatic polyamides, as a particularly preferred example, it can be cited a copolymer produced by copolymerizing 50% by mole of terephthalic acid, 25% by mole of hexamethylenediamine and 25% by mole of 2-methylpentamethylenediamine.

The appropriate selection of the composition ratios and kinds of aromatic monomer and other monomer components constituting the semi-aromatic polyamides can adjust, as required, melting points, glass transition temperatures and the like.

Additionally, the present invention may use a polyphenylene sulfide along with a semi-aromatic polyamide as a matrix resin of a resin composition. As the polyphenylenesulfides, well known ones all can be used, and linear and crosslinked structures all may be used. For example, crystalline polymers are included that contain as composition elements the repeat units denoted by general formulas below: 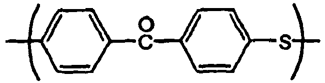 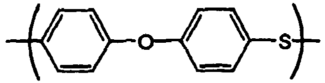 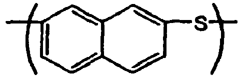 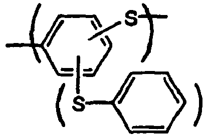 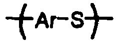 [wherein Ar represents a 1,4-phenylene group, a 1,3-phonylene group, or a 1,2-phenylene group.]

These polyphenylenesulfides desirably include those containing the aforementioned repeat units as the main components and thus those containing the aforementioned repeat units alone, preferably those containing 80% by mole or more of the repeat units, more preferably those containing 90% by mole of the repeat units. In a case where the substantial total amounts of polyphenylenesulfides are not composed of the aforementioned repeat units, the balances can be supplemented with copolymerizable repeat units, for example, the repeat units below: 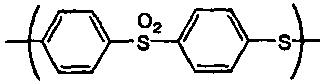 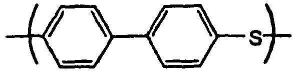 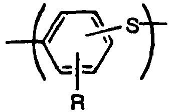 [wherein R is an alkyl group, an alkoxy group, a nitro group or a phenylene group.]

In addition, as polyphenylenesulfides, commercially available articles may be employed. The commercially available articles include, for example, Tohpren (trade name, product of Tohpren Co., Ltd.), Ryton (trade name, product of Toray Industries Inc.), Fortron (trade name, product of Polyplastics Co., Ltd.) and the like.

In the present invention, the amount of blending of a matrix resin component, including cases where the resin component comprises a semi-aromatic polyamide alone and comprises a combination of a semi-aromatic polyamide and a polyphenylenesulfide, is from 30 to 90% by weight based on the total amount of resin composition, more preferably from 40 to 70% by weight. As the amount of blending of the resin components deviates from the range of 30 to 95% by weight, a resin composition cannot sometimes be obtained that satisfies at a high level a variety of physical properties necessary for a reflector plate.

Also, in a case where a semi-aromatic polyamide and a polyphenylenesulfide are use together, although the blending ratios of these resins can be, as appropriate, selected, the semi-aromatic polyamide may be blended so as to be preferably from 40 to 90% by weight based on the total amount of these resins, more preferably from 50 to 80% by weight.

In the present invention, as inorganic fibers blended with a mixture of a semi-aromatic polyamide or the aromatic polyamide and a polyphenylenesulfide, potassium titanate fibers and/or wollastonite is used.

Potassium titanate fibers are not particularly limited, and conventionally well-known ones are widely used. Examples capable of use include 4 potassium titanate fibers, 6 potassium titanate fibers, 8 potassium titanate fibers.

The size of potassium titanate fibers is not particularly restricted, but normally an average fiber diameter is from 0.01 to 1 µm, preferably from 0.1 to 0.5 µm; an average fiber length is from 1 to 50 µm, preferably from 3 to 30 µm. In the present invention, commercial articles are usable as well and, for example, TISMO (trade name, product of Otsuka Chemical Co., Ltd., average fiber diameter: 0.2 to 0.5 µm, average fiber length: 5 to 30 µm).

Wollastonite is an inorganic fiber of calcium metasilicate. The size of wollastonite is not particularly limited, but normally an average fiber diameter is from 0.1 to 15 µm, preferably from 2.0 to 7.0 µm; an average fiber length is from 3 to 180 µm, preferably from 20 to 100 µm. An average aspect ratio is 3 or more, preferably from 3 to 50, more preferably from 5 to 30.

Wollastonite can suitably use commercially available articles, for example, including Baistal K101 (trade name, product of Otsuka Chemical Co., Ltd., average fiber diameter: 2 to 5 µm, average fiber length: 5 to 30 µm), NyglosI-10013 (trade name, product of Nyco Corp., average fiber diameter: 5 to 30 µm, average fiber length: 5 to 30 µm).

Of these, taking into account the light-screening factor and the whiteness of an obtained resin composition, potassium titanate fiber is preferable.

In the present invention, in order to further improve physical properties such as mechanical strength of a resultant resin composition, potassium titanate fiber and wollastonite may be surface treated. Surface treatment follows a well-known process, and can be carried out using a silane coupling agent, a titanium coupling agent. Of these, a silane coupling agent is preferable and aminosilane is particularly preferable.

The amount of blending of potassium titanate fiber and/or wollastonite is normally from 5 to 70% by weight based on the total amount of resin composition, preferably from 10 to 70% by weight (resin component: 30 to 90% by weight), more preferably from 20 to 60% by weight (resin component: 40 to 80% by weight). As the amount deviates from the range of 5 to 70% by weight, a resin composition that satisfies at a high level various physical properties required for a reflector plate cannot be obtained in some cases.

Furthermore, in the present invention, within the range of not spoiling preferred, various physical properties of a resin composition, particularly in order to further improve the light reflection factor, the light-screening factor and the like, titanium oxide is blended. In particular, when wollastonite is used as an inorganic fiber, it is preferable to use it in combination with titanium oxide. Titanium oxide is not particularly limited, and a variety of crystalline forms such as the anatase type, the rutile type, and the monoclinic type all can be employed. Although different crystalline forms can be used in combination of two or more types, the rutile type is preferable that has a high refractive index and is good in light stability. Also, the shape of titanium oxide is particularly unlimited as well, diverse shapes such as a particle shape, a fiber shape, and a plate shape (including a flake shape, a scale shape, a mica shape, and the like) all can be used, and different shapes can also be used in combination of two or more shapes. While the size of titanium oxide is not particularly restricted, an average size thereof is preferably from 0.1 to 0.3 µm in particle diameter. In addition, those that are treated with various surface treatment agents may be used. The amount of blending of titanium oxide is from about 5 to about 30% by weight (resin component: 30 to 90% by weight, potassium titanate fiber and/or wollastonite: 5 to 65% by weight).

A resin composition concerning the present invention, within the range of not spoiling preferred physical properties thereof, may be blended with a well-known inorganic fiber exclusive of potassium titanate fiber and wollastonite. The inorganic fibers are not particularly limited, for example, being capable of including zinc oxide fiber, sodium titanate fiber, aluminum borate fiber, magnesium borate fiber, magnesium oxide fiber, aluminum silicate fiber, silicon nitride fiber.

Moreover, a resin composition relating to the present invention, within the range of not damaging preferred physical properties thereof, may be blended with an antioxidant, a heat stabilizer.

The antioxidants include a phenol-based antioxidant, a phosphorus-based antioxidant, a sulfur-based antioxidant.

The phenol-based antioxidants include, for example, triethylene glycol bis[3-(3-t-butyl-5-methylv-hydroxyphenyl) propionate], 1,6-hexanediol bis[3-(3,5-di-t-butyl-4-hydroxyphenyl) propionate], pentaerythrityl-tetrakis[3-(3,5-di-t-butyl-4-hydroxyphenyl) propionate], octadecyl-3-(3,5-di-t-butyl-4-hydroxyphenyl) propionate, 3,5-di-t-butyl-4-hydroxybenzilphosphonate-diethylester, N,N'-hexamethylenebis(3,5-di-t-butyl-4-hydroxy-hydroxycinnamide), 1,3,5-trimethyl-2,4,6-tris(3,5-di-t-butyl-4-hydroxybenzil) benzene, 3,9-bis[2-{3-(3-t-butyl-4-hydroxy-5-methylphenyl)propionyloxy}-1,1-dimethylethyl]-2,4,8,10-tetraoxaspiro[5,5] undecane. Of these, pentaerythrityl-tetrakisl3-(3,5-di-t-butyl-4-hydroxyphenyl) propionate], N,N'-hexamethylenebis(3,5-di-t-butyl-4-hydro-hydroxycinnamide) are preferable.

Examples of the phosphorus-based antioxidants include, for example, tris(2,4-di-t-butylphenyt) phosphite, 2-[[2,4,8,10-tetrakis(1,1-dimethylethyl)dibenzo[d,f][1,3,2]dioxaphosphebin6-yl]oxy]. N,N-bis[2-[[2,4,8,10-tetrakis(1,1dimethylethyl)dibenzo[d,f][1,3,2]dioxaphosphebin6-ylloxyl-ethyllethanamin, bis(2,6-di-t-butyl-4-methylphenyl)pentaerythritol diphosphate. Of these, 2-[[2,4,8,10-tetrakis(1,1-dimethylethyl)dibenzo[d,f][1,3,2]dioxaphosphebin6-yl]oxy]-N,N-bis[2-[[2,4,8,10-tetrakis(1,1dimethylethyl)dibenzo[d,f][1,3,2]dioxaphosphebin6-yl]oxy]-ethyl]ethanamin is preferable.

Examples of the sulfur-based antioxidants include, for example, 2,2-thio-diethlenebis[3-(3,5-di-t-butyl-4-hydroxyphenyl)propionatel, tetrakis[methylene-3-(dodecylthio)propionate]methane.

These antioxidants can be used solely or in combination of two or more thereof.

Furthermore, a resin composition according to the present invention, within the range of not damaging preferred physical properties thereof, can be blended with one, or two or more of a variety of additives that have been used for synthetic resins as usual. The additives include, for example, inorganic fillers such as talc, silica, and zinc oxide (including a tetrapod shape), a fire retardant, a plasticizer, a nucleating agent, a pigment, a dye, a releasing agent, an ultraviolet absorber.

A resin composition of the present invention can be produced by melting and blending an aromatic polyamide with wollastonite and/or potassium titanate fiber and further, as required, other additives in accordance with a well-known process. Melting and blending can utilize all well-known melting and blending apparatuses such as a twin screw extruder.

A resin composition of the first aspect of the present invention can be molded to give a molded article (i.e., reflector plate) suitable for a variety of applications by means of a well-known resin molding process such as the injection molding process, the compression molding process, the extrusion process.

A reflector plate thus obtained can suitably be used, for example, as a reflector plate for emission apparatuses including emission apparatuses and the like used for various electrical and electronic parts, a keyless entry system of an automobile, lighting in a refrigerator, a back light of a liquid crystal display apparatus, an automobile front panel lighting apparatus, a desk lamp, a headlight, a household electrical appliance indicators, optical communication instruments such as an infrared communication apparatus, a ceiling illumination apparatus, outdoor display apparatuses such as a traffic sign.

### (Examples)

First, resin compositions according to the present invention will specifically be set forth in terms of Examples and Comparative Examples. Additionally, synthetic resins and inorganic fibers used in the present.

### Examples and the Comparative Examples are specified as follows:

### [Synthetic resins]

Semi-aromatic polyamide A: a semi-aromatic polyamide (trade name "Amodel A4000", product of DuPont) produced by polymerizing hexamethylenediamine, terephthalic acid and adipic acid, in the ratio of 50% by mole to 32% by mole to 18% by mole, respectively.

Semi-aromatic polyamide B: a semi-aromatic polyamide (trade name "Zytel HTN501", product of DuPont, melting point 305°C, glass transition temperature 125°C) produced by polymerizing 2-methylpentamethylenediamine, hexamethylenediamine and terephthalic acid in the ratio of 25% by mole, 25% by mole and 50% by mole, respectively.

Polyphenylsulfide: (trade name "Ryton M2888", product of Toray Industries Inc., hereafter referred to as "PPS").

Aromatic polyester: (trade name "VECTRA C950," product of Polyplastics Co., Ltd., hereafter referred to as "LCP").

### [Inorganic fibers]

Wollastonite: (trade name "Baistal K101," product of Otsuka Chemical Co., Ltd., average fiber diameter 2 to 5 µm, average fiber length 20 to 30 µm).

Potassium titanate fiber: (trade name "TISMO D101," product of Otsuka Chemical Co., Ltd., average fiber length 10 to 20 µm, average fiber diameter 0.3 to 0.6 µm).

Powder titanium oxide: (trade name "JR-406," product of Tayca Corporation, average particle diameter 0.21 µm).

Chopped glass fiber: (trade name "ECS 03T 219/PL," product of Nippon Electric Glass Co., Ltd., hereafter called "GF").

### Examples 1 to 8 and Comparative Examples 1 to 6 Examples 1 and 5 are also Comparative Examples

In the blending ratios (% by weight) indicated in Table 5 below, pellets of a resin composition of the present invention were produced by charging a semi-aromatic polyamide or a semi-aromatic polyamide and PPS into the main hopper of a twin-screw kneading extruder, after melt kneading at 330°C, adding thereto potassium titanate fiber or wollastonite and further titanium oxide from the side feeder, and then melt kneading and extruding the mixture.

The pellets thus obtained of a resin composition concerning the present invention were introduced into an injection molding machine (trade name "JS75," product of The Japan Steel Works, Ltd., cylinder temperature 330°C) equipped with a mold for making a JIS test piece (mold temperature 130°C) to conduct injection molding, thereby producing various JIS test pieces, with subjecting the test pieces to the following performance tests.
(1) Tensile strength and tensile break elongation: measured in accordance with JIS K7113.
(2) Bending strength and bending elastic modulus: measured in accordance with JIS K7271.
(3) Impact value by a IZOD with a notch: evaluated using No.1 test piece in accordance with JIS K7110.
(4) HDT (heat resistance test): Heat distortion temperature (HDT, °C) was measured according to JIS K7207 when a bending stress 1.82 MPa was applied.
(5) Coefficient of linear expansion: measured at 20 to 130°C using a TAM120 thermal machine analysis apparatus (trade name "SSC5200H
   Disk-station," product of Seiko Instruments Inc.). The pulling out direction was denoted by MD and the vertical direction thereof denoted by TD. In order to evaluate the index of anisotropy, the linear expansion coefficient ratio of TD to MD (TD/MD) was indicated.
(6) Flow rate (Q value): measured using a higher type flow tester on Examples 1 to 8 and Comparative Examples 1 to 4 at 330°C × 9.8 MPa, on Example 9 at 290°C × 9.8 MPa, and on Comparative Example 10 at 310°C × 9.8 MPa, each having a residual heat time of 360 seconds, an orris pore diameter of 1 mm and a thickness of 10 mm.
(7) Water absorption degree: measured in accordance with JIS K7209.
(8) Hunter whiteness: measured using a color difference meter from Nippon Denshoku Industries Co., Ltd. Also, the evaluations were denoted by ⊚ for whiteness of 93 or more, by ○ of less than 93 and 91 or more, by Δ of less than 91 and 89 or more, by × of less than 89 and 85 or more, and by xx of 85 or less.
(9) Heat resistance discoloring test: The heat resistance discoloring test was carried out in an oven in air at 180°C × 2 hours and the whiteness was measured as in (8).
(10) Light ray transmission: A sample that was made a film of 100 µm thick with a vacuum pressing machine was measured by means of a recording spectrophotometer U-3000 model from Hitachi, Ltd. and transmittances thereof using 460 nm, 530 nm and 630 nm were recorded.

The evaluations were indicated with ⊚ for a transmittance of 0%, with ○ of below 3% and 0% or more, witch Δ of below 5% and 3% or more, and with × of 5% or more.

These results are tabulated in Table 1.

**TABLE 1**

| | | Example | | | | | | | | Comparative Example | | | | | |
|---|---|---|---|---|---|---|---|---|---|---|---|---|---|---|---|
| | | 1 | 2 | 3 | 4 | 5 | 6 | 7 | 8 | 1 | 2 | 3 | 4 | 5 | 6 |
| Semi aromatic polyamide A | | 50 | 50 | 50 | 35 | - | - | - | - | 50 | 35 | - | - | - | - |
| Semi-aromatic polyamide B | | - | - | - | - | 50 | 50 | 50 | 35 | - | 15 | 50 | 35 | - | - |
| PPS | | - | - | - | 15 | | - | - | 15 | - | - | - | 15 | 50 | - |
| LCP | | - | - | - | - | - | - | - | - | - | - | - | - | - | 50 |
| Potassium titanate fiber | | 50 | 30 | - | - | 50 | 30 | - | - | - | - | - | - | - | - |
| Wollastonite | | - | - | 30 | 30 | - | - | 30 | 30 | - | - | - | - | 30 | 30 |
| GF | | - | - | - | - | - | - | - | - | 30 | 30 | 30 | 30 | - | - |
| Titanium oxide | | - | 20 | 20 | 20 | - | 20 | 20 | 20 | 20 | 20 | 20 | 20 | 20 | 20 |
| Tensile strength (MPa) | | 183 | 176 | 136 | 117 | 191 | 171 | 130 | 116 | 132 | 119 | 130 | 121 | 131 | 91 |
| Tensile break elongation (%) | | 2.5 | 2.7 | 2.4 | 2.1 | 2.4 | 2.6 | 2.1 | 1.8 | 2.4 | 2 | 2.2 | 1.8 | 2.1 | 1.4 |
| Bending strength (MPa) | | 339 | 257 | 217 | 161 | 331 | 278 | 236 | 166 | 195 | 149 | 200 | 155 | 174 | 141 |
| Bending elastic modulus (GPa) | | 15.3 | 12.0 | 10.7 | 11.0 | 16.5 | 13.1 | 11.5 | 12.7 | 10.3 | 10.1 | 11 | 10.7 | 14.5 | 14.3 |
| IZOD impact value (J/m) | | 49 | 45 | 39 | 35 | 42 | 48 | 39 | 34 | 47 | 40 | 45 | 39 | 37 | 20 |
| HDT(°C) | | 285 | 281 | 280 | 270 | 250 | 245 | 245 | 242 | 285 | 275 | 250 | 248 | 232 | 223 |
| Linear expansion coefficient (× 10⁻⁵/K) 10⁻⁵ /K) | MD | 1.5 | 2.3 | 2.5 | 2.4 | 1.1 | 1.8 | 2.0 | 1.9 | 2.1 | 2.0 | 1.5 | 1.6 | 1.9 | 2.1 |
| | TD | 5.0 | 4.7 | 4.6 | 4.6 | 3.5 | 3.3 | 3.2 | 3.2 | 5.7 | 5.7 | 4.0 | 4.1 | 3.2 | 3.0 |
| | TD/MD | 3.3 | 2.0 | 1.8 | 1.9 | 3.2 | 1.8 | 1.6 | 1.7 | 2.7 | 2.9 | 2.7 | 2.6 | 1.7 | 1.4 |
| Q value (× 10⁻² cm³) | | 2.4 | 1.2 | 1.1 | 4.9 | 9.6 | 8.2 | 8.1 | 14 | 0.5 | 2.9 | 5.5 | 9.2 | 15.3 | 3.2 |
| Water absorption degree (%) | | 0.2 | 0.2 | 0.19 | 0.14 | 0.1 | 0.1 | 0.09 | 0.07 | 0.21 | 0.15 | 0.15 | 0.1 | 0.02 | 0.03 |
| Hunter whiteness | | | | | | | | | | | | | | | |
| After molding | | ○ | ○ | ⊚ | ○ | ○ | ⊚ | ⊚ | ⊚ | Δ | Δ | ○ | ○ | ×× | ×× |
| After heat | | | | | | | | | | | | | | | |
| resistance discoloring test | | Δ | Δ | ○ | Δ | ⊚ | ⊚ | ⊚ | ○ | × | × | ○ | ○ | ×× | ×× |
| Light ray transmission (%) transmission (%) | (460nm) | ⊚ | ⊚ | ⊚ | ⊚ | ⊚ | ⊚ | ⊚ | ⊚ | Δ | Δ | Δ | Δ | ⊚ | ⊚ |
| | (530nm) | ⊚ | ⊚ | ○ | ○ | ⊚ | ⊚ | ○ | ○ | × | × | × | × | ○ | ⊚ |
| | (630nm) | ⊚ | ⊚ | ○ | ○ | ⊚ | ⊚ | ○ | ○ | × | × | × | × | ○ | ⊚ |

In particular, the light ray transmission is greatly lowered as compared with those of Comparative Examples 1 to 4 using fiberglass. Further, also, because Comparative Examples 5 and 6 using other heat resistance resins such as PPS, LCP and the like are extremely inferior in whiteness due to the color order of base resins themselves, it is clear that compositions indicated in the present Examples are excellent as reflector plates.

## Claims

1. A resin composition for reflector plates **characterized by** containing 30 to 90% by weight of a semi-aromatic polyamide having the ratio of aromatic monomers to all the monomer components being 20% by mole or more, 5 to 65% by weight of potassium titanate fiber and/or wollastonite and 5-30 % by weight of titanium oxide,
in which
said semi-aromatic polyamide contains as monomer components an aromatic dicarboxylic acid and an aliphatic alkylenediamine.

2. A resin composition for reflector plates according to claim 1, in which
said semi-aromatic polyamide further contains as a monomer component an aliphatic dicarboxylic acid.

## Patentansprüche

1. Harzzusammensetzung für Reflektorplatten, **dadurch gekennzeichnet, dass** sie 30 bis 90 Gewichts-% eines semi-aromatischen Polyamids, welches das Verhältnis aromatischer Monomere zu allen Monomerbestandteilen von 20 Mol-% oder mehr aufweist,
5 bis 65 Gewichts-% Kaliumtitanatfaser und/oder Wollastonit und
5 bis 30 Gewichts-% Titanoxid
enthält, in welcher das semi-aromatische Polyamid als Monomerbestandteile eine aromatische Dicarbonsäure und ein aliphatisches Alkylendiamin enthält.

2. Harzzusammensetzung für Reflektorplatten nach Anspruch 1, in welcher das semi-aromatische Polyamid weiterhin als einen Monomerbestandteil eine aliphatische Dicarbonsäure enthält.

## Revendications

1. Composition de résine pour plaques de réflecteur **caractérisée en ce qu'**elle contient de 30 à 90% en poids d'un polyamide semi-aromatique ayant une proportion de monomères aromatiques par rapport aux composants monomères de 20% par mole ou plus, de 5 à 65% en poids en fibre de titanate de potassium et/ou de wollastonite et de 5 à 30% en poids d'oxyde de titane, dans laquelle le polyamide semi-aromatique contient comme composants monomères un acide dicarboxylique aromatique et un alkylènediamine aliphatique.

2. Composition de résine pour plaques de réflecteur selon la revendication 1, dans laquelle le polyamide semi-aromatique contient comme composant monomère un acide dicarboxylique aliphatique.
